Europäisches Patentamt

European Patent Office

Office européen des brevets

(11) Veröffentlichungsnummer: **0 374 417**
**A2**

## (12) EUROPÄISCHE PATENTANMELDUNG

(21) Anmeldenummer: 89119534.9

(22) Anmeldetag: 20.10.89

(51) Int. Cl.⁵ **H02H 3/08, H02H 3/12, H02H 3/00**

(30) Priorität: 20.12.88 DE 3842883

(43) Veröffentlichungstag der Anmeldung:
27.06.90 Patentblatt 90/26

(84) Benannte Vertragsstaaten:
CH DE FR LI NL SE

(71) Anmelder: **Duin, Albert Walter**
**Osteranger Strasse 38**
**D-8000 München 60(DE)**

(72) Erfinder: **Duin, Albert Walter**
**Osteranger Strasse 38**
**D-8000 München 60(DE)**

(74) Vertreter: **Glawe, Delfs, Moll & Partner**
**Patentanwälte**
**Postfach 26 01 62 Liebherrstrasse 20**
**D-8000 München 26(DE)**

(54) **Schutzvorrichtung für elektrische Geräte.**

(57) Eine Schutzvorrichtung für elektrische Geräte
hat einen von einem Schutzrelais betätigten Unterbrecher in der Stromzuleitung des Gerätes, einen
den Strom in der Stromzuleitung erfassenden Sensor mit angeschlossener Detektorschaltung, die ein
Störsignal abgibt, wenn der Strom über einen oberen Grenzwert oder einem unteren Grenzwert liegt.
Eine auf das Störsignal ansprechende Steuerschaltung steuert das Schutzrelais an. Der obere und
untere Grenzwert, auf den die Detektorschaltung anspricht ist vorzugsweise einstellbar, und zum Zwek-
ke des Einstellens kann das Ansprechen des Schutzrelais durch einen von außen betätigbaren Schalter
verhindert werden. Anzeigelampen können das Ansprechen des Detektorschaltung auf den Grenzwert
anzeigen. Die gesamte Schutzvorrichtung kann in
Form einer Steckeinheit ausgebildet und z.B. in einer
Verteilerdose einer Beleuchtungsanlage untergebracht werden.

FIG.1

## Schutzvorrichtung für elektrische Geräte

Die Erfindung betrifft eine Schutzvorrichtung für elektrische Geräte, mit einem Schutzrelais, das einen Unterbrecher in der Stromzuleitung des Gerätes betätigt, einem den Strom in der Stromzuleitung des Gerätes erfassenden Sensor, einer an den Sensor angeschlossenen Detektorschaltung, die beim Vorliegen eines Störzustandes ein Störsignal erzeugt, und einer auf das Störsignal ansprechenden Steuerschaltung zum Ansteuern des Schutzrelais.

Schutzanordnungen zum Schutz elektrischer Geräte gegen Überlastung, z.B. auch gegen Kurzschluß, sind z.B. aus DEAS 27 02 181, CH-PS 595 000 oder US-PS 4 713 721 bekannt. Ferner ist aus US-PS 4 466 041 eine Schutzvorrichtung der eingangs genannten Art bekannt, die auf Änderungen des zum Gerät fließenden Stroms anspricht. Damit kann aber z.B. ein Störzustand, der nicht plötzlich auftritt, sondern beispielsweise schon beim Einschalten des Gerätes vorhanden ist, nicht erfaßt werden.

Für bestimmte Anwendungsfälle sind die bekannten Schutzvorrichtungen nicht geeignet oder nicht vollbefriedigend. Dies gilt z.B. für solche elektrische Geräte, die unterschiedliche Werte des im Normalzustand zum Gerät fließenden Stroms aufweisen können. Ein Beispiel hierfür sind Beleuchtungsanlagen mit einer veränderbaren Anzahl von angeschlossenen Leuchtquellen. Je nach Anzahl der angeschlossenen Leuchtquellen ist die Gesamtlast und damit der gesamte Stromverbrauch unterschiedlich. Spricht die Schutzvorrichtung nur auf solche Störfälle an, bei denen der Stromverbrauch über dem maximal möglichen Nennstrom liegt, dann ist sie nicht in der Lage, Störfälle, die bei einer kleineren Anzahl von angeschlossenen Leuchtquellen auftreten, zuverlässig zu detektieren. Dies kann sich nachteilig auswirken, z.B. im Fall von Beleuchtungsanlagen mit Niedervolt-Halogenlampen, die an blanke Zuleitungsdrähte angeschlossen sind. Werden diese Zuleitungsdrähte z.B. durch einen metallischen Fremdkörper miteinander oder zur Erde kurzgeschlossen, so kann durch diesen ein Kriechstrom fließen, der zu Überhitzung und Brandgefahr führen kann. Wenn die Anlage dabei nicht mit der maximal möglichen Anzahl von Leuchtquellen bestückt ist, sondern nur mit einem Teil ihrer Nennleistung betrieben wird, die Schutzschaltung aber auf die volle Nennleistung ausgelegt ist, dann kann es vorkommen, daß die Schutzschaltung auf einen solchen Kriech- oder Aufheizstrom nicht anspricht, weil der Gesamtstrom den Nennwert, auf den die Schutzschaltung ausgelegt ist, nicht erreicht. Ferner ist es wichtig, daß nach einem Ansprechen der Schutzschaltung das elektrische Gerät, insbesondere eine Beleuchtungseinrichtung, und die Schutzschaltung selbst in einfacher Weise, aber ohne Beeinträchtigung der Betriebssicherheit wieder in den Normalzustand versetzt werden können.

Der Erfindung liegt die Aufgabe zugrunde, eine Schutzschaltung der genannten Art so auszugestalten, daß sie besonders für die Verwendung mit Beleuchtungsanlagen oder anderen elektrischen Geräten mit variabler Stromaufnahme geeignet ist.

Gemäß einem ersten Aspekt der Erfindung wird die Aufgabe mit den Merkmalen des Anspruchs 1 gelöst. Es wird hierdurch gewährleistet, daß die Schutzschaltung auch dann anspricht, wenn das elektrische Gerät, z.B. eine Beleuchtungseinrichtung, mit geringerer Nennleistung betrieben wird, als derjenigen, auf die die Schutzschaltung ausgelegt ist. Es wird hierdurch verhindert, daß bei geringerer Leistungsaufnahme des Gerätes Störzustände mit parasitären Strömen, die die maximale Nennleistung nicht erreichen, unerkannt bleiben. Gemäß einem anderen Aspekt der Erfindung wird die genannte Aufgabe mit den Merkmalen des Anspruchs 6 gelöst. Diese Lösung ermöglicht in einfacher Weise eine Anpassung der Ansprechschwelle der Schutzschaltung an den jeweils beim Einschalten des Gerätes fließenden Normalstrom.

Eine weitere Lösung der Aufgabe gemäß einem dritten Aspekt der Erfindung ist im Anspruch 8 angegeben. Sie ergibt den Vorteil, daß die Schutzschaltung nach einmaligen Ansprechen auf ein Störsignal solange in dem den Unterbrecher offenhaltenden Haltezustand verbleibt, bis der Versorgungsanschluß zu dem elektrischen Gerät spannungslos gemacht wird, z.B. durch Ziehen des Netzsteckers. Im spannungslosen Zustand kehrt die Schutzschaltung wieder in den Normalzustand zurück, so daß der Unterbrecher schließt und beim Wiederanschließen des Netzsteckers der Strom wieder normal fließen kann, falls nicht bei Fortbestand der Störung erneut das Störsignal erzeugt wird. Es ist somit außer dem Herausziehen und Wiedereinführen des Netz steckers kein äußerer Eingriff an der Schutzvorrichtung erforderlich, um deren Normalzustand wiederherzustellen.

Die Unteransprüche beziehen sich auf weitere vorteilhafte Ausgestaltungen der erfindungsgemäßen Lösungen. Die genannten Lösungen können auch vorteilhafterweise in Kombination miteinander verwendet werden.

Ausführungsformen der Erfindung werden anhand der Zeichnungen näher erläutert. Es zeigt:

Fig. 1 das Blockschaltbild einer ersten Ausführungsform der Erfindung;

Fig. 2 ein detailliertes Schaltbild der Ausführungsform nach Fig. 1;

Fig. 3 in perspektivischer Darstellung eine bevorzugte äußere Ausgestaltung der Schutzvorrichtung gemäß Fig. 1 und 2;

Fig. 4 das Schaltbild einer anderen Ausführungsform der Erfindung, die zusätzlich eine Fehlerprüfschaltung aufweist;

Fig. 5 das Schaltbild einer weiteren Ausführungsform mit Fehlerprüfschaltung.

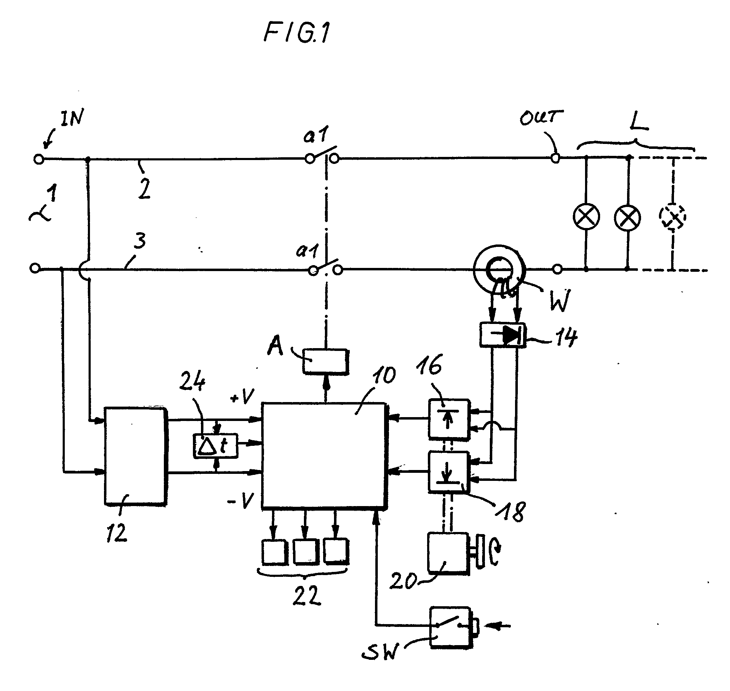

Gemäß Fig. 1 wird ein elektrischer Verbraucher L, z.B. eine Beleuchtungsanlage mit einer veränderbaren Anzahl von Lampen, von einer Spannungsquelle 1 über eine z.B. aus zwei Phasen 2,3 bestehende Zuleitung mit Wechselstrom versorgt. Bei der Spannungsquelle 1 kann es sich z.B. um die Sekundärseite eines Netztransformators handeln, der den Verbraucher L mit Niedrigspannung von z.B. 6 V oder 12 V versorgt, wie dies z.B. der Fall ist, wenn es sich bei dem Verbraucher L um eine Beleuchtungsanlage mit einer oder mehreren Niedervolt-Halogenlampen handelt. Die Spannungsquelle 1 kann aber auch unmittelbar das Wechselstromnetz sein, wobei dann der Verbraucher L direkt mit Netzspannung versorgt wird oder einen Transformator zur Erzeugung von Niedervoltspannung aufweisen kann.

In mindestens einer der Phasen der Stromzuleitung 2,3 befindet sich als Schutzkontakt ein Unterbrecherkontakt a1, bei dem es sich um einen Relaiskontakt handelt, der von dem Relais A gesteuert wird. Das Relais A wird von einer Steuerschaltung 10 angesteuert. Solange das Relais A stromdurchflossen ist, hält es die Schutzkontakte a1 geschlossen. Wird das Relais A stromlos, so öffnet es die Schutzkontakte a1, so daß der Verbraucher L stromlos wird.

Die Steuerschaltung 10 wird mit Gleichspannung von einer Versorgungsschaltung 12 versorgt, die an die Stromzuleitungen 2,3 angeschlossen ist. Als induktiver Sensor für den in der Zuleitungsphase 3 des Gerätes L fließenden Strom ist ein Ringkernwandler W vorgesehen, der die Zuleitungsphase 3 umgibt, so daß dieser als Primärwicklung des Wandlers wirkt. Der in der Sekundärwicklung des Wandlers W induzierte Wechselstrom wird in einer Gleichrichterschaltung 14 gleichgerichtet und einer ersten Vergleichsschaltung 16 und einer zweiten Vergleichsschaltung 18 zugeführt. Die Vergleichsschaltung 16 erzeugt ein Überlast-Störsignal, wenn das Signal von dem Sensor W über einen oberen Grenzwert ansteigt. Die zweite Vergleichsschaltung 18 erzeugt ein Unterlast-Störsignal, wenn das Sensorsignal unter einem unteren Grenzwert liegt. Die beiden Grenzwerte in den Vergleichsschaltungen 16 und 18 können, vorzugsweise gekoppelt und gleichzeitig, durch ein von außen betätigbares Einstellmittel 20, z.B. einen Drehknopf, verändert werden. Das Überlast-Störsignal und das Unterlast-Störsignal werden der Steuerschaltung 10 zugeführt und führen jeweils zum Ansteuern des Relais A, so daß der Unterbrecher a1 geöffnet wird. Eine Anzeigeeinrichtung 22 zeigt das Vorliegen oder Fehlen der Störsignale an. Beispielsweise kann eine rote Leuchtdiode aufleuchten, wenn die Steuerschaltung 10 auf das Überlast-Störsignal anspricht, oder eine gelbe Leuchtdiode, wenn die Steuerschaltung auf das Unterlast-Störsignal anspricht, während eine grüne Leuchtdiode den Normalzustand anzeigen kann.

Beim Einschalten des elektrischen Gerätes L liegt während einer Anlaufzeit, d.h. solange bis der Strom seinen Endwert erreicht hat, ein Unterlast-Zustand vor. Damit dieser nicht als Störung erfaßt wird und zum Ansprechen des Relais A führt, ist eine Verzögerungsschaltung 24 vorgesehen, die nach dem Einschalten des Gerätes während einer vorgegebenen Anlaufzeit Δ t das Ansprechen der Steuerschaltung 10 auf das Unterlast-Signal von der Vergleichsschaltung 18 verhindert.

Damit das Einstellen des oberen und unteren Grenzwertes in den Vergleichsschaltungen 16 und 18 mittels des Einstellmittels 20 vorgenommen werden kann, ohne daß das Relais A angesteuert wird und der Unterbrecherkontakt a1 geöffnet wird, ist ein von außen betätigbarer Schalter 26, z.B. in Form einer Taste vorgesehen, der solange er betätigt wird, das Ansteuern des Relais A durch die Steuerschaltung 10 verhindert. Bei betätigtem Schalter 26 führen somit die Überlast- und Unterlast-Störsignale nur zu einem Ansteuern der Anzeigevorrichtung 22, aber nicht zu einer Betätigung des Relais A.

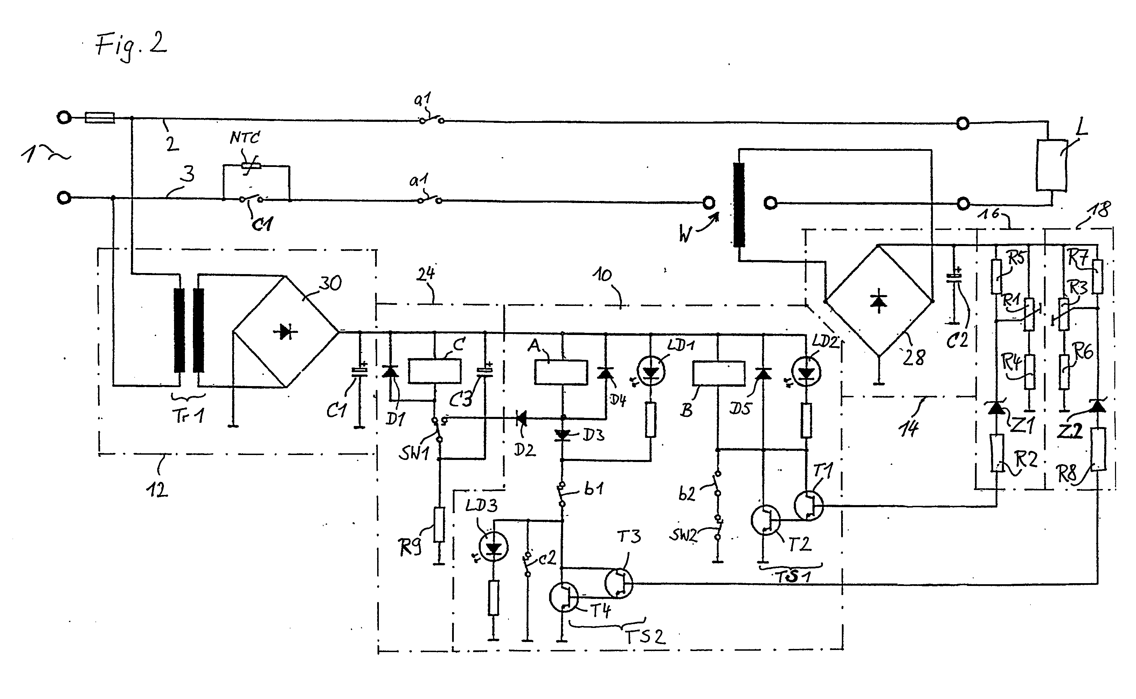

Fig. 2 zeigt ein detaillierteres Schaltbild der Ausführungsform nach Fig. 1. Die in Fig. 1 dargestellten Blöcke 10,12,14,16,18 sind in Fig. 2 mit strichpunktierten Linien angedeutet und mit den gleichen Bezugszeichen versehen. Der nur mit seinem Schaltsymbol dargestellte Ringkernwandler W umgibt die Stromzuleitungsphase 3. Sein Ausgangssignal wird in der Gleichrichterschaltung 14 von einer aus Dioden bestehenden Vollweg-Gleichrichterschaltung 28 und einem Glättkondensator C2 gleichgerichtet und gelangt an die beiden Vergleichsschaltungen 16,18. Die Vergleichsschaltung 16 weist einen Spannungsteiler aus einem Potentiometer R1 und einem in Serie dazu nach Masse geschalteten Widerstand R4 auf. Das Potentiometer R1 liegt parallel zu einem Widerstand R5, dem eine Zenerdiode Z1 und ein weiterer Widerstand R2 nachgeschaltet sind. Analog dazu weist die Vergleichsschaltung 18 einen Spannungsteiler aus einem Potentiometer R3 und einem in Serie dazu nach Masse geschalteten Widerstand R6 auf, wobei das Potentiometer R3 parallel zu einem Widerstand R7 liegt, dem eine Zenerdiode Z2 und ein weiterer Widerstand R8 nachgeschaltet sind.

Wenn die vom gleichgerichteten Sensorsignal erzeugte und am Potentiometer RI abgegriffene Spannung den Schwellenwert der Zenerdiode Z1 übersteigt, erzeugt die Vergleichsschaltung 16 am Ausgang des Widerstandes R2 ein Überlast-Störsignal, welches der Steuerschaltung 10 zugeführt wird. Die Zenerdiode Z1 gibt zusammen mit dem Potentiometer R1 den oberen Grenzwert für das Ansprechen der Schutzschaltung vor, wobei dieser Grenzwert durch Einstellen des Potentiometers R1 verändert werden kann.

Wenn die vom gleichgerichteten Sensorsignal erzeugte und am Potentiometer R3 abgegriffene Spannung über der Schwellenspannung der Zenerdiode Z2 liegt, wird am Ausgang des Widerstandes R8 ein Signal abgegeben, welches dem Normalzustand der Schaltung entspricht. Unterschreitet das Sensorsignal den Schwellenwert der Zenerdiode Z2, so erscheint am Ausgang des Widerstandes R8 keine Spannung mehr, und dieses Ausbleiben der Spannung stellt das Unterlast-Störsignaldar, auf welches die Steuerschaltung 10 ebenfalls anspricht. Die Zenerdiode Z2 und das Potentiometer R3 legen den unteren Grenzwert für das Ansprechen der Schutzschaltung fest, und dieser Grenzwert kann durch Einstellen des Potentiometers R3 verändert werden. Die Potentiometer R1 und R3 sind vorzugsweise als Tandempotentiometer ausgebildet und können gemeinsam durch ein Einstellmittel (20 in Fig. 1) verstellt werden, so daß der Abstand zwischen dem oberen und dem unteren Grenzwert konstant bleibt.

Die an die Stromzuleitungsphasen 2,3 angeschlossene Versorgungsspannung 12 besteht aus einem Transformator Tr1, dessen Sekundärseite eine von Dioden gebildete Vollweg-Gleichrichterschaltung 30 mit nachgeschaltetem Glättkondensator C1 angeschlossen ist. Von der Versorgungsschaltung 12 werden die Verzögerungsschaltung 24 und die Steuerschaltung 10 mit Gleichspannung von z.B. +15 V versorgt. Die Verzögerungsschaltung 24 besteht aus einer Parallelschaltung eines Relais C, eines Kondensators C3 und einer Diode D1, die gemeinsam in Serie mit einem Widerstand R9 nach Masse geschaltet sind. Zwischen Widerstand 9 und Relais C liegt ein Umschaltkontakt SW1, dessen Funktion noch erläutert wird. Das Relais C steuert einen Unterbrecherkontakt c1 in der Stromzuleitungsphase 3, der von einem Widerstand NTC mit negativem Temperaturkoeffizienten überbrückt wird. Das Relais C steuert ferner einen Kontakt c2 in der Steuerschaltung 10, dessen Funktion noch erläutert wird. Die Steuerschaltung 10 umfaßt das Schutzrelais A, welches im stromdurchflossenen Zustand die Unterbrecherkontakt a1 in den Stromzuleitungsphasen 2,3 geschlossen hält. Das Relais ist mit Dioden D2,D3,D4 in der angegebenen Weise geschaltet. Parallel zum Relais A liegt eine z.B. grüne Leuchtdiode LD1 in Serie mit einem Widerstand.

Weiterhin enthält die Steuerschaltung 10 ein Relais B. Dieses steuert einen Kontakt b1 in Serie zu dem Schutzrelais A sowie einen weiteren Kontakt b2, der in Serie mit einem Schalterkontakt SW2 das Relais B mit Masse verbindet. Parallel zum Relais B liegen eine Diode D5 sowie eine z.B. rote Leuchtdiode LD2 in Serie mit einem Widerstand.

Parallel zu den Schaltkontakten b2 und SW2 ist das Relais B über eine Transistorschaltstufe TS1 mit Masse verbindbar, die aus den Transistoren T1 und T2 besteht. Das Gate des Transistors T1 wird von dem Überlast-Störsignal aus der Vergleichsstufe 16 angesteuert. Wenn das Überlast-Störsignal vorliegt, wird die Transistorstufe TS1 durchgeschaltet.

Das Schutzrelais A ist mit Masse verbindbar durch den Relaiskontakt b1 und die in Serie dazu liegende Transistorschaltstufe TS2, die aus den Transistoren T3 und T4 besteht. Das Gate des Transistors T3 ist von dem Ausgangssignal der Vergleichsschaltung 18 angesteuert. Wenn die Vergleichstufe 18 keine Ausgangsspannung liefert, also ein Unterlast-Störsignal vorliegt, wird die Transistorschaltstufe TS2 gesperrt. Parallel zur Transistorschaltstufe TS2 liegen der bereits erwähnte Relaiskontakt C2 und die Serienschaltung aus einer z.B. gelben Leuchtdiode LD3 und einem Widerstand.

Die Schaltkontakte SW1 und SW2 der Verzögerungsschaltung 24 und der Steuerschaltung 10 werden von dem Tastschalter SW gemäß Fig. 1 gesteuert. Wie beschrieben, wird der Schalter SW nur zum Zweck der Einstellung des oberen und unteren Grenzwertes betätigt. Wenn der Schalter SW nicht betätigt ist, befinden sich die Schaltkontakte SW1 und SW2 in der in Fig. 2 gezeigten Stellung.

Die Vorrichtung gemäß Fig. 1 und 2 arbeitet wie folgt: Wenn nach Einschalten des Gerätes die Anlaufzeit $\Delta T$ verstrichen und der Dauerzustand erreicht ist, hält das stromdurchflossene Relais C den Kontakt c1 geschlossen und den Kontakt c2 geöffnet. Wenn der Normalstrom fließt, ist die Transistorstufe TS1 gesperrt, das Relais B ist stromlos, der Relaiskontakt b1 (Ruhekontakt) ist geschlossen und der Relaiskontakt b2 (Arbeitskontakt) ist geöffnet. Da das Sensorsignal vom Ringwandler W über dem unteren Grenzwert in der Vergleichsschaltung 18 liegt, liegt am Gate des Transistors T3 eine positive Spannung an, so daß die Transistorstufe TS2 durchgeschaltet ist. Somit führt das Schutzrelais A überden geschlossenen Relaiskontakt b1 und die durchgeschaltete Transistorstufe TS2 Strom und hält die Unterbrecherkontakte a1 geschlossen. Auch die grüne Leuchtdiode LD1 ist über b1 und TS2 stromdurchflossen und zeigt den Normalzustand an.

Tritt durch eine Störung eine Überlast auf, so erscheint am Ausgang der Vergleichsschaltung 16 eine positive Spannung, die die Transistorstufe TS1 durchschaltet, so daß das Relais B anzieht und den Kontakt b1 öffnet. Dadurch wird das Schutzrelais A stromlos und die Unterbrecherkontakte a1 werden geöffnet. Die Leuchtdiode LD1 erlischt. Gleichzeitig ist der Relaiskontakt B2 geschlossen worden, so daß das Relais B im Ansprechzustand verbleibt, obwohl durch Öffnen der Kontakte a1 auch der Sensor W stromlos geworden ist und damit die Transistorstufe TS1 wieder gesperrt wird. Das Relais B mit dem dazu in Serie geschalteten Relaiskontakt b2 bildet eine Halteschaltung mit zwei Kippzuständen, die durch das Überlast-Störsignal von der Vergleichsschaltung 16 aus dem Normalzustand in den Ansprechzustand gebracht wird und in diesem Ansprechzustand auch nach Aufhören des Störsignals verbleibt. Um die Schaltung in den Normalzustand zu bringen, genügt es die gesamte Schaltung von der Stromquelle 1 zu trennen, z.B. durch Ziehen des Netzstekkers. Hierdurch wird das Relais B stromlos und der Selbsthaltekontakt b2 wird geöffnet. Wird der Netzstecker wieder eingeführt, so bleibt, wenn die Störung beseitigt ist, das Relais B stromlos, das Schutzrelais A kann über den geschlossenen Relaiskontakt b1 wieder anziehen und die Unterbrecherkontakte a1 schließen. Falls dagegen auch nach Wiederanschließen des Netzsteckers die Überlast-Störung fortbesteht, wird das Relais B erneut über die Transistorstufe TS1 durchgeschaltet.

Kommt im Betrieb des Gerätes L ein Unterlast-Zustand vor, z.B. indem eine oder mehrere an eine Beleuchtungsanlage angeschlossene Leuchtquellen entfernt werden, so sinkt das Sensorsignal unter den in der Vergleichsschaltung 18 vorgegebenen unteren Grenzwert ab, die positive Spannung am Gate des Transistors T2 entfällt, und die Transistorstufe TS2 wird gesperrt. Auch hierdurch wird das Relais A stromlos und öffnet die Unterbrecherkontakte a1. Dieser Zustand wird durch Aufleuchten der gelben Leuchtdiode LD3 angezeigt, da diese nicht mehr durch die Transistorstufe TS2 kurzgeschlossen ist.

Unmittelbar nach dem Einschalten des Gerätes wird während einer Anlaufzeit Δ t, die durch die Aufladezeit des Kondensators C1 bestimmt ist, das Relais C noch stromlos gehalten. Während dieser Zeit bleibt der Relaiskontakt c1 geöffnet, so daß der Strom nur verzögert über den Heißleiter NTC fließen kann. Ferner wird während dieser Zeit der Relaiskontakt c2 geschlossen gehalten, so daß das Schutzrelais A anziehen und die Unterbrecherkontakte a1 schließen kann, obwohl die Transistorstufe TS2 noch gesperrt ist, da das vom Sensor W erfaßte Stromsignal noch unter dem unteren Grenzwert der Vergleichsschaltung 18 liegt.

Die von den Potentiometern R1,R3 vorgegebenen oberen und unteren Grenzwerte für das Ansprechen der Schutzschaltung können in einfacher Weise durch Einstellen mit dem Einstellmittel 20 (Fig. 1) an den jeweiligen Ist-Strom zum Gerät L angepaßt werden. Eine solche Einstellung muß jedoch bei geschlossenen Unterbrecherkontakten a1 vorgenommen werden, d.h. es muß dafür gesorgt werden, daß während der Einstellung das Schutzrelais A nicht anspricht. Hierzu ist der Tastschalter SW (Fig. 1) vorgesehen, der die Schaltkontakte SW1 und SW2 (Fig. 2) betätigt. Durch Betätigen des Umschalt-kontaktes SW1 wird einerseits der Stromweg durch das Relais C unterbrochen, so daß dieses nicht anziehen kann und andererseits das Relais A über die Diode D2 und den Widerstand R9 mit Masse verbunden. Dies hat zur Folge, daß während der Bestätigung des Schalters SW weder ein Öffnen des Relaiskontaktes b1 durch ein Überlast-Störsignal, noch das Sperren der Transistorstufe TS2 durch ein Unterlast-Störsignal zum Stromloswerden des Relais A und damit zum Öffnen der Schutzkontakte a1 führen. Diese Störsignale bewirken somit lediglich das Aufleuchten der jeweiligen Leuchtdioden LD2 bzw. LD3. Ferner wird während der Betätigung des Tastschalters SW der Kontakt SW2 geöffnet, so daß nach dem Anziehen des Relais B durch ein Überstrom-Störsignal keine Selbsthaltung über den Relaiskontakt b2 stattfinden kann.

Vor dem erstmaligen Einstellen der Schutzvorrichtung sollte das Tandempotentiometer R1,R3 auf Null stehen, d.h. die Grenzwerte in den Vergleichsschaltungen 16,18 sind auf den niedrigst möglichen Wert eingestellt, der durch Bemessung der Widerstände R4 bis R7 geeignet gewählt wird. Das Signal vom Sensor W liegt daher auf jeden Fall über dem Grenzwert der Vergleichsschaltung 16, so daß ein Überlast-Störsignal erzeugt wird, welches durch Durchschalten der Transistorstufe TS1 die rote Leuchtdiode LD2 zum Aufleuchten bringt. Nun wird bei gedrücktem Tastschalter SW das Einstellmittel 20 gedreht und damit das Tandempo-tentiometer RI,R3 verstellt, bis der obere Grenzwert in der Vergleichsschaltung 16 über den vom Sensor W erfaßten Ist-Strom angestiegen ist. Dadurch wird die Transistorschaltstufe TS1 gesperrt und die Leuchtdiode LD2 erlischt, während die grüne Leuchtdiode LD1 aufleuchtet. Nun kann man den Tastschalter SW loslassen und die Schaltung ist auf den jeweiligen Ist-Wert eingestellt. Hat man versehentlich die Tandempotentiometer R1,R3 zu weit aufgedreht, so daß auch der untere Grenzwert der Vergleichsschaltung 18 über dem Ist-Strom liegt, so leuchtet die gelbe Leuchtdiode LD3 auf und zeigt den Unterlast-Störzustand an. Dies kann durch Zurückdrehen der Tandempotentiometer R1,R3 bis zum Erlöschen der gelben Leuchtdiode LD3 und Aufleuchten der grünen Leuchtdiode LD1 korrigiert werden.

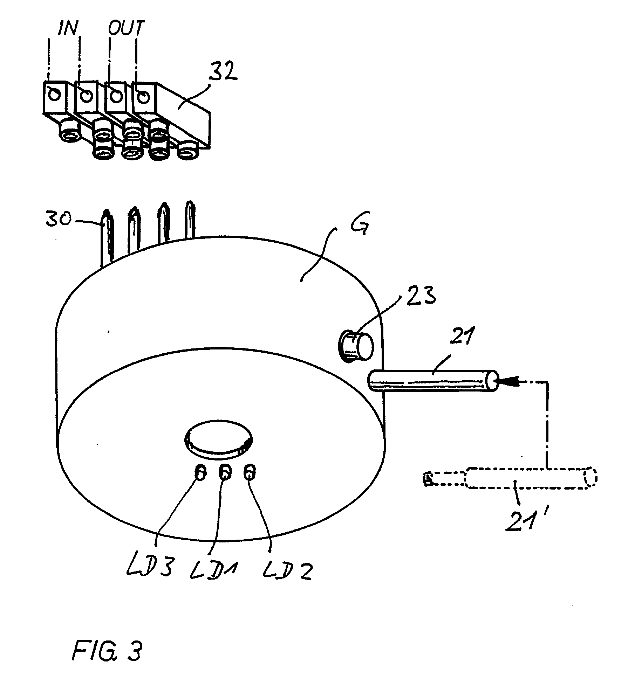

Fig. 3 zeigt schematisch, wie die gesamte Schutzvorrichtung, insbesondere bei Verwendung einer Beleuchtungsanlage, in einem Gehäuse G angeordnet werden kann, welches die Form einer üblichen elektrischen Verteilerdose hat. Mit Steckstiften 30 und einem z.B. als Lüsterklemme ausgebildeten Steckverbinder 32 kann die gesamte Schutzvorrichtung in die Zuleitung zu der Beleuchtungsanlage od.dgl. eingefügt werden, wobei diese Steckverbindungen z.B. an den an Fig. 1mit IN und OUT gekennzeichneten Verbindungspunkten sitzen können. Sämtliche in Fig. 1 zwischen IN und OUT liegenden Schaltungsteile befinden sich innerhalb des Gehäuses G in Fig. 3. An der Außenseite des Gehäuses G ist das Einstellmittel 20 in Form eines Drehstiftes 21 zugänglich, der vorzugsweise so ausgebildet ist, daß er nach erfolgter Einstellung herausgezogen werden kann, wie bei 21' angedeutet, so daß nach einmal erfolgter Einstellung der Schutzvorrichtung eine unbefugte Verstellung nicht mehr möglich ist. Ferner ist an der Außenseite des Gehäuses G ein Tastknopf 23 zum Betätigen des Schalters SW von Fig. 1 vorgesehen. Schließlich sind an der Unterseite des Gehäuses G die drei Leuchtdioden LD1,LD2,LD3 sichtbar, die zusammen die Anzeigevorrichtung 22 von Fig. 1 bilden.

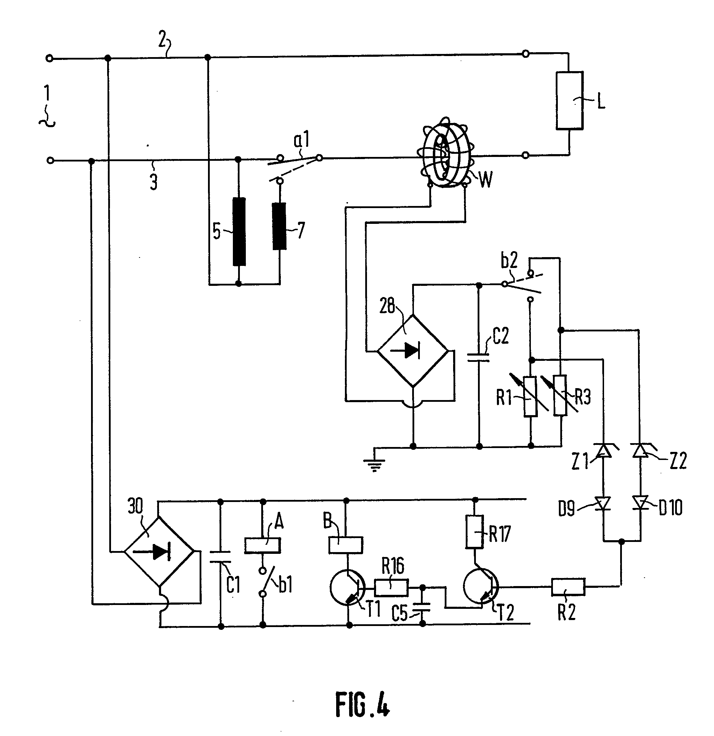

Die Ausführungsform nach Fig. 4 unterscheidet sich nach der von Fig. 1 bis 3 dadurch, daß keine Vergleichsschaltung für ein Unterlast-Störsignal und auch keine Anzeigemittel zum Anzeigen des Störzustandes und/oder Normalzustandes vorgesehen sind. Stattdessen ist die Ausführungsform nach Fig. 4 erweitert durch eine Prüfschaltung, die selbsttätig das Fortbestehen eines Überlast-Störzustandes feststellt und die selbsttätige Rückkehr der Schutzvorrichtung in den Normalzustand steuert, wenn der Störzustand wegfällt.

Gemäß Fig. 4 wird ein elektrischer Verbraucher L von einer Spannungsquelle 1 über die beiden Zuleitungsphasen 2,3 mit Wechselstrom versorgt. In mindestens einer der Phasen der Stromzuleitung 2,3 befindet sich als Schutzkontakt ein Unterbrecherkontakt a1, bei dem es sich um einen Relaiskontakt handelt, der von dem Relais A gesteuert wird. Das Relais A ist mit Gleichspannung aus einer Vollweg-Gleichrichterschaltung 30 mit nachgeschaltetem Glättkondensator C1 beaufschlagt, die die von der Zuleitung 2,3 des Verbrauchers L abgegriffene Wechselspannung gleichrichtet. Wenn beispielsweise die Zuleitung 2,3 eine 12 V-Wechselspannung führt, erzeugt die Gleichrichterschaltung eine Gleichspannung von 15 V für das Relais A. Solange das Relais A stromdurchflossen ist, hält es den Schutzkontakt a1 geschlossen. Wird das Relais A stromlos, so öffnet es den Schutzkontakt a1.

Als induktiver Sensor für den in der Zuleitungsphase 3 fließenden Strom ist ein Ringkernwandler W vorgesehen, der die Zuleitungsphase 3 umgibt, so daß diese als Primärwicklung des Wandlers anzusehen ist. Der in der Sekundärwicklung des Wandlers W induzierte Wechselstrom wird einer Gleichrichterschaltung 28 und dem Glättkondensator C2 zugeführt, so daß eine am einstellbaren Widerstand R1 abgreifbare Gleichspannung erzeugt wird, die zu dem in der Zuleitungsphase 3 fließenden Wechselstrom proportional ist. Wenn in einem Störfall ein Überstrom in der Zuleitungsphase 3 fließt, ist die am Widerstand R1 abfallende Gleichspannung größer als eine von einer Zenerdiode Z1 vorgegebene Vergleichsspannung und es entsteht ein Störsignal, welches über einen Widerstand R2 an das Gate eines Transistors T2 gelegt wird und diesen durchschaltet. Dieser schaltet seinerseits über einen Widerstand R16 den Transistor T1 durch. Der Transistor T1 liegt in Serie mit einem zweiten Relais B an der oben erwähnten 15 V-Gleichspannung. Das Relais B betätigt einen Kontakt b1, welches das Relais A mit Masse verbindet oder trennt. Der Widerstand R16 bildet mit einem Kondensator C5 eine Verzögerungsschaltung.

Der Schutzkontakt A1 ist als Umschaltkontakt ausgebildet, der beim Unterbrechen der Zuleitungsphase gleichzeitig die Sekundärwicklung 7 eines Transformators 5,7 kontaktiert, dessen Primärseite an die Zuleitungsphasen 3,5 angeschlossen ist. Der Transformator 5,7 erzeugt nach dem Umschalten des Kontaktes A1 einen schwachen Prüfstrom, der durch die Last fließt und vom Ringwandler W detektiert werden kann. Das gleichgerichtete Ausgangssignal des Ringwandlers W kann über einen vom Relais B betätigten Umschaltkontakt B2 auch einem zweiten einstellbaren Widerstand R3 zugeführt werden, von dem ein Prüfstörsignal über eine weitere Zenerdiode Z2 und den Widerstand R2 dem Transistor T2 zugeführt werden kann. R1 und Z1 sind so bemessen bzw. eingestellt, daß die Zenerdiode Z1 ein Störsignal durchläßt, wenn bei geschlossenem Schutzkontakt A1 ein Überstrom in der Zuleitungsphase auftritt. R3 und Z2 sind so bemessen bzw. eingestellt, daß von der Zenerdiode Z2 ein Prüfstörsignal durchgelassenwird, wenn der vom Transformator 5,7 über den umgeschalteten Kontakt A1 erzeugte Prüfstrom über den Normalwerten liegt und das Fortbestehen der Störung anzeigt. Mit den Zenerdioden Z1 und Z2 in Serie geschaltete Dioden D9,D10 verhindern ein Rückfließen des Signals über die jeweils andere Zenerdiode.

Der über den Umschaltkontakt A1 zuschaltbare Transformator 5,7 bildet zusammen mit dem vom Relais B betätigten Umschaltkontakt B2 eine Halteschaltung, die das Relais B im Stör-Ansprechzustand hält, solange der Sensor W beim Fließen des Prüfstroms durch die Last L den Fortbestand einer Störung erfaßt.

Die Ausführungsform nach Fig. 4 arbeitet wie folgt: Im Normalzustand ist das Relais B stromlos, wodurch der Kontakt b1 geschlossen und das Relais A stromdurchflossen ist, so daß der Schutzkontakt A1 in der gezeigten geschlossenen Stellung gehalten wird. Bei stromlosem Relais B ist ferner der Relaiskontakt b2 in der gezeigten unteren Stellung in Kontakt mit dem einstellbaren Widerstand R1. Tritt durch eine Störung ein Überstrom auf, so steigt die gleichgerichtete Ausgangsspannung des Ringwandlers W über die Schwellenspannung der Diode Z1 an, und es wird ein Störsignal erzeugt, welches den Transistor T2 und durch diesen wiederum den Transistor T1 durchschaltet. Das Relais B spricht nunmehr an und öffnet den Kontakt b1, so daß das Relais A stromlos wird und der Schutzkontakt a1 geöffnet und in der gestrichelten Stellung mit der Transformatorwicklung 7 verbunden wird. Gleichzeitig wird der Relaiskontakt b2 in die obere Stellung (gestrichelt) in Kontakt mit dem veränderbaren Widerstand R3 gebracht. Der Transformator 5,7 erzeugt einen Prüfstrom, und falls die Störung fortbesteht, übersteigt die gleichgerichtete, am einstellbaren Widerstand R3 abgegriffene Ausgangsspannung des Ringwandlers W die Schwellenspannung der Zenerdiode Z2, so daß diese als Prüfstörsignal eine Spannung an das Gate des Transistors T2 liefert, so daß dieser und der Transistor T1 durchgeschaltet gehalten wird. Wird die Störung beseitigt, oder werden die Stromleitungen 2,3 vom Netz getrennt, so liefert die Zenerdiode Z2 keine Spannung mehr an das Gate des Transistors T2, so daß dieser gesperrt wird. Der Transistor T1 bleibt jedoch noch solange durchgeschaltet, bis sich der Kondensator C5 über R6 und den Emitter von T1 entladen hat. Erst nach der durch C5 und R6 bestimmten Verzögerungszeit wird der Transistor T1 gesperrt, wodurch das Relais B stromlos wird und der Kontakt b1 wieder geschlossen wird, so daß das Relais A den Schutzkontakt a1 wieder in die Schließlage bringen kann.

Die Schaltelemente bei der Ausführungsform nach Fig. 4 können beispielsweise wie folgt bemessen sein: Widerstände R2 = 6,8 kΩ, R1 und R3 jeweils 100 kΩ, einstellbar und R16 = 1 kΩ; Schwellenspannung der Zenerdiode Z1 = 30 V und von Z2 = 12 V. Kondensatoren C1,C2 und C5 jeweils 100 µF.

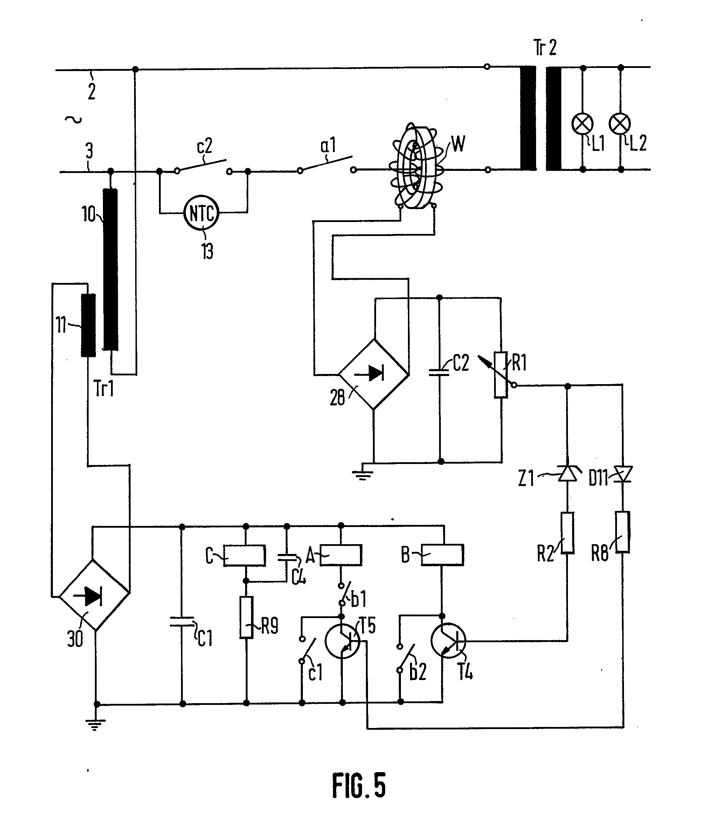

Bei der Ausführungsform nach Fig. 5 ist die Schutzschaltung auf der Primärseite eines Transformators TR2 vorgesehen, der nachgeschaltete Verbraucher, z.B. Halogenleuchtquellen L1,L2 usw.

mit Spannung versorgt. An die Zuleitungen 2,3 zur Primärseite des Transformators TR2 ist ein weiterer Transformator TR1 angeschlossen, dessen Sekundärwicklung über die Gleichrichterschaltung 30 und einen Glättkondensator C1 eine Versorgungsgleichspannung für drei Relais A,B und C liefert. Wenn Relais A erregt wird, öffnet es den normalerweise geschlossenen Schutzkontakt a1 in der Stromleitung 3, so daß der Transformator TR2 und damit die Verbraucher L1,L2 stromlos werden.

Als induktiver Sensor ist ein die Zuleitung 3 umgebender Ringwandler W vorgesehen, dessen Ausgangsspannung von einem Vollweggleichrichter 28 gleichgerichtet und vom Kondensator C2 geglättet wird und am einstellbaren Widerstand R1 anliegt. Am Widerstand R1 ist eine Zenerdiode Z1 in Sperrichtung angeschlossen, die über einen Widerstand R2 mit dem Gate des Transistors T4 verbunden ist. Ebenfalls an den Widerstand R1 ist in Durchlaßrichtung eine Diode D11 angeschlossen, die über den Widerstand R8 mit dem Gate des Transistors T5 verbunden ist. Der Transistor T4 kann von einem Kontakt b2 kurzgeschlossen werden, der vom Relais B betätigt wird. Der Transistor T5 kann von einem Kontakt c1 kurzgeschlossen werden, der vom Relais C betätigt wird. Ein ebenfalls vom Relais B betätigter Kontakt b1 ist mit dem Relais A und dem Transtor T5 in Serie geschaltet. Das Relais C steuert ferner einen in der Stromzuleitung 3 liegenden Kontakt c2, der von einem NTC-Glied 13, d.h. einem Widerstand mit negativem Temperaturkoeffizienten bzw. einem Heißleiter überbrückt wird. Das Relais C ist parallel zu einem Kondensator C4 und in Serie mit einem Widerstand R9 geschaltet.

Die Ausführungsform nach Fig. 5 arbeitet wie folgt: Es wird zunächst der Fall betrachtet, in welchem die Beleuchtungsanlage unter Normalbedingungen im Betrieb ist. In den Stromzuleitungen 2,3 fließt ein der normalen Leistungsaufnahme der Verbraucher entsprechender Strom. In diesem Zustand wird von dem stromdurchflossenen Relais C der Kontakt c1 geöffnet und der Kontakt c2 geschlossen gehalten. Das Relais B ist stromlos, da der Transistor T4 gesperrt ist, und hierdurch wird der Kontakt b1 (Ruhekontakt) geschlossen und der Kontakt b2 (Arbeitskontakt) offen gehalten. Das Schutzrelais A ist stromdurchflossen und hält den Schutzkontakt a1 geschlossen. Tritt nun ein Überstrom auf, so arbeitet die Schutzschaltung in gleicher Weise wie die Ausführungsform nach Fig. 1, d.h. die von den Dioden D5 bis D8 gleichgerichtete Ausgangsspannung des Wandlers W erzeugt über den einstellbaren Widerstand R1 eine Spannung, die größer als die Durchbruchspannung der Zenerdiode Z ist, so daß ein Störsignal an die Basis des Transistors T4 gelangt und diesen durchschaltet. Das nun stromdurchflossene Relais B öffnet den Kontakt b1, so daß das Schutzrelais A stromlos wird und der Schutzkontakt a1 sich öffnet. Gleichzeitig ist der Relaiskontakt b2 geschlossen worden, so daß das Relais B im stromdurchflossenen Zustand selbsthaltend ist. Dieser durch Überstrom verursachte Ansprechzustand der Schutzschaltung kann dadurch beseitigt werden, daß die Stromzuleitungen 2,3 kurzzeitig vom Netz getrennt werden, z.B. durch Ziehen des Netzsteckers. Die Relaiskontakte b1,b2 kehren dann in ihre Normalstellung zurück, und bei Wiedereinstecken des Stekkers wird, falls die Störung nicht fortbesteht, durch das nun wieder stromdurchflossene Relais A der Schutzkontakt a1 geschlossen.

Die Schutzschaltung nach Fig. 5 kann aber nicht nur auf Überstrom, sondern auch auf Unterstrom ansprechen, d.h. dann, wenn der in der Leitung 3 fließende Strom wesentlich kleiner ist als der Normalwert, der der normalen Leistungsaufnahme der Verbraucher L1,L2 entspricht. Dieser Fall kann z.B. bei Beleuchtungsanlagen dann auftreten, wenn an den Transformator TR eine geringere Anzahl von Beleuchtungsquellen angeschlossen wird, als der installierten Leistung entspricht. Wie bereits in der Einleitung erwähnt, würde in einem solchen Fall ein Nebenschlußstrom die Schutzschaltung nicht zum Ansprechen bringen, wenn der gesamte fließende Strom den Nennwert nicht wesentlich übersteigt.

Bei der Ausführungsform nach Fig. 5 wird die gleichgerichtete Ausgangsspannung des Ringwandlers W über den einstellbaren Widerstand R1 auch der Diode D11 zugeführt und von dieser an das Gate des Transistors T5 gelegt, der mit dem Relais A in Serie liegt. Wenn der Strom in der Leitung 3 nicht wesentlich unter dem Normalwert liegt, ist dadurch der Transistor T5 durchgeschaltet, so daß das Relais A bei geschlossenem Kontakt b1 stromdurchflossen ist und den Schutzkontakt a1 geschlossen hält. Fällt jedoch der Strom in der Leitung 3 unter einen Grenzwert ab, der durch Bemessung der Diode D1 und des Widerstandes R8 sowie durch Einstellen des Widerstandes R1 vorgegeben werden kann, so reicht die von der Diode D11 an das Gate des Transistors T5 gelieferte Spannung nicht mehr aus, um den Transistor T5 durchzuschalten. Der Transistor T5 sperrt, das Schutzrelais A wird stromlos und der Schutzkontakt a1 öffnet sich.

Ein unter dem Normalwert liegender Strom fließt natürlich auch beim Einschalten des Stroms in die Leitungen 2,3. Damit die Anlage überhaupt in Betrieb genommen werden kann, ist das Relais C mit den Kontakten c1,c2 vorgesehen. Das Relais C ist ein zeitverzögertes Relais. Beim Einschalten der Spannung verbleibt es zunächst im Ruhezustand, wobei der Kontakt c2 geöffnet und der Kontakt c1 geschlossen ist.

Da der Kontakt c1 den Transistor T5 kurzschließt, ist das Schutzrelais A stromdurchflossen und schließt den Stromkontakt a1. Über den den geöffneten Kontakt c2 überbrückenden Heißleiter 13 erfolgt ein allmählicher Stromanstieg in der Leitung 3. Nach einer ausreichenden Verzögerungszeit, die durch die Verzögerungsschaltung aus dem Kondensator C4 und dem Widerstand R9 bestimmt wird, spricht das Relais C an und schließt den Kontakt c2 und öffnet den Kontakt c1, so daß sich die Schutzschaltung im normalen Betriebszustand befindet.

Die Bemessung der Schaltelemente wird bei der Ausführungsform nach Fig. 5 vorzugsweise so vorgenommen, daß ein Überstrom-Ansprechen erfolgt, wenn die Leistungsaufnahme des Transistors TR einen oberen Grenzwert erreicht, der 10-50 Watt, vorzugsweise 20 Watt über der Nennleistung liegt, während ein Ansprechen auf Unterstrom dann erfolgt, wenn die Leistungsaufnahme auf einen unteren Grenzwert abgefallen ist, der 50-100 Watt, vorzugsweise 75 Watt, unter der Nennleistung liegt, wobei sich diese Werte vorzugsweise auf eine normale Leistungsaufnahme von 400 Watt beziehen. Bei hiervon abweichender Nennleistung der mit der Schutzschaltung zu schützenden elektrischen Einrichtung können die Werte entsprechend höher oder niedriger gewählt werden.

## Ansprüche

1. Schutzvorrichtung für elektrische Geräte, mit einem Schutzrelais (A), das einen Unterbrecher (a1) in der Stromzuleitung des Gerätes (L) betätigt, einem den Strom in der Stromzuleitung des Gerätes erfassenden Sensor (W), einer an den Sensor angeschlossenen Detektorschaltung (16,18), die bei Vorliegen eines Störzustandes ein Störsignal erzeugt, und einer auf das Störsignal ansprechenden Steuerschaltung (10) zum Ansteuern des Schutzrelais (A), dadurch **gekennzeichnet,** daß die Detektorschaltung eine erste Vergleichsschaltung (16) zum Erzeugen eines Überlast-Störsignals, wenn das Sensorsignal über einem oberen Grenzwert liegt, und eine zweite Vergleichsschaltung (18) zum Erzeugen eines Unterlast-Störsignals, wenn das Sensorsignal unter einem unter Grenzwert liegt, aufweist.

2. Vorrichtung nach Anspruch 1, **gekennzeichnet** durch ein von außen betätigbares Einstellmittel (20) zum Einstellen des oberen und unteren Grenzwertes.

3. Vorrichtung nach Anspruch 2, dadurch **gekennzeichnet,** daß das Einstellmittel zum gleichzeitigen gekoppelten Einstellen beider Grenzwerte vorgesehen ist derart, daß der Abstand zwischen beiden Grenzwerten konstant bleibt.

4. Vorrichtung nach einem der Ansprüche 1 bis 3, **gekennzeichnet** durch Anzeigemittel (22), die das Vorhandensein oder Fehlen mindestens eines der Störsignale anzeigen.

5. Vorrichtung nach einem der Ansprüche 1 bis 4, **gekennzeichnet** durch eine Verzögerungsschaltung (24), die innerhalb einer vorgegebenen Zeitspanne (Δt) nach Einschalten des Gerätes das Ansprechen der Steuerschaltung (10) auf das Unterlast-Störsignal verhindert.

6. Schutzvorrichtung für elektrische Geräte, mit einem Schutzrelais (A), das einen Unterbrecher (a1) in der Stromzuleitung des Gerätes (L) betätigt, einem den Strom in der Stromzuleitung des Gerätes erfassenden Sensor (W), einer an den Sensor angeschlossenen Detektorschaltung (16,18), die bei Vorliegen eines Störzustandes ein Störsignal erzeugt, und einer auf das Störsignal ansprechenden Steuerschaltung (10) zum Ansteuern des Schutzrelais (A), **gekennzeichnet** durch eine Vergleichsschaltung (16) zum Erzeugen eines Überlast-Störsignals, wenn das Sensorsignal über einem oberen Grenzwert liegt, einem Einstellmittel (20) zum Verändern des oberen Grenzwertes, einem von außen betätigbaren Schalter (SW), der bei Betätigung das Ansteuern des Schutzrelais (A) durch das Überlast-Störsignal verhindert, und ein Anzeigemittel (LD2), das das Vorhandensein oder Fehlen des Überlast-Störsignals anzeigt.

7. Vorrichtung nach Anspruch 6, dadurch **gekennzeichnet,** daß eine weitere Vergleichsschaltung (18) vorgesehen ist, die ein Unterlast-Störsignal erzeugt, wenn das Sensorsignal unter einem unteren Grenzwert liegt, daß auch der untere Grenzwert durch ein Einstellmittel (20) veränderbar ist, und daß ein Anzeigemittel (LD3) zum Anzeigen des Vorhandenseins oder Fehlens des Unterlast-Störsignals vorgesehen ist.

8. Schutzvorrichtung für elektrische Geräte, mit einem Schutzrelais (A), das einen Unterbrecher (a1) in der Stromzuleitung des Gerätes (L) betätigt, einem den Strom in der Stromzuleitung des Gerätes erfassenden Sensor (W), einer an den Sensor angeschlossenen Detektorschaltung (16,18), die bei Vorliegen eines Störzustandes ein Störsignal erzeugt, und einer auf das Störsignal ansprechenden Steuerschaltung (10) zum Ansteuern des Schutzrelais (A), dadurch **gekennzeichnet,** daß die Steuerschaltung einen Haltekreis (B,b2) mit zwei Schaltzuständen, einem Normalzustand und einem Ansprechzustand, aufweist und im Störzustand das Schutzrelais (A) in dem den Schutzkontakt (a1) öffnenden Zustand hält, daß der Haltekreis durch das Störsignal in den Ansprechzustand steuerbar ist und in diesem auch nach Wegfall des Störsignals verbleibt, und daß der Haltekreis von einer an die Stromzuleitung (2,3) angeschlossenen Versorgungsschaltung (12) mit einer Versorgungsspannung beaufschlagt ist und bei Wegfall der Versorgungsspannung in den Normalzustand zurückkehrt.

9. Schutzvorrichtung nach Anspruch 8, dadurch **gekennzeichnet,** daß der Haltekreis als Kippschaltung (B,b1,T1) ausgebildet ist mit einem vom Störsignal durchschaltbaren Schalttransistor (T1) in Serie mit einem Relais (B), welches im Ansprechzustand einen in Serie mit dem Schutzrelais (A) liegenden Kontakt (b1) öffnet und einen den Schalttransistor (T1,T4) kurzschließenden Kontakt (b1,b2) schließt.

10. Schutzvorrichtung nach Anspruch 8, **gekennzeichnet** durch eine gleichzeitig mit dem Öffnen des Schutzkontaktes (a1) aktivierbare Prüfschaltung (5,7,b3), die die Stromzuleitung (2,3) unter Überbrückung des Schutzkontaktes (a1) mit einer Prüfspannung beaufschlagt, einen Sensor (W1,W2), der den aufgrund der Prüfspannung fließenden Prüfstrom erfaßt, und eine daran angeschlossene Vergleichsschaltung (R3,Z2), die bei einem den Fortbestand der Störung anzeigenden Wert des Prüfstroms ein Prüfstörsignal erzeugt, welches das Verbleiben der Schutzschaltung im Störzustand bewirkt.

11. Schutzvorrichtung nach Anspruch 10, **gekennzeichnet** durch eine vom Prüfstörsignal ansteuerbare Auslöseschaltung (R2,C,c1), die bei Wegfall des Prüfstörsignals die Selbsthaltung der Kippschaltung (B,b1,T1) in dem zweiten Kippzustand aufhebt.

12. Schutzvorrichtung nach Anspruch 10, **gekennzeichnet** durch eine beim Öffnen des Schutzkontaktes (a1) aktivierbare Verzögerungsschaltung (b2,C4,R5,T3,D,d1), die nach Wegfall des Prüfstörsignals erst nach Ablauf einer Verzögerungszeit die Rückkehr der Steuerschaltung in den Normalzustand freigibt.

13. Schutzvorrichtung nach einem der Ansprüche 1 bis 12, dadurch **gekennzeichnet,** daß der Sensor ein induktiver Sensor (W1) mit angeschlossener Gleichrichterschaltung (D5 bis D8,C2) ist, deren Ausgangsspannung über eine Zenerdiode (Z1) als Störsignal der Kippschaltung (B,b1,T1) zuführbar ist.

14. Schutzvorrichtung nach Anspruch 13, dadurch **gekennzeichnet,** daß der induktive Sensor (W1) ein Ringkernwandler ist, der eine Phase (3) der Stromzuleitung umschließt.

15. Schutzvorrichtung nach einem der Ansprüche 1 bis 14, dadurch **gekennzeichnet,** daß das an die Schutzschaltung angeschlossene Gerät eine Beleuchtungsanlage mit einer variablen Anzahl von Leuchtquellen ist.

16. Schutzvorrichtung nach Anspruch 15, dadurch **gekennzeichnet,** daß die Schutzvorrichtung anspricht, wenn die von den Leuchtquellen aufgenommene Leistung um 10 - 50 Watt, vorzugsweise 20 Watt über dem Normalwert und um 50 - 100 Watt, vorzugsweise 75 Watt unter dem Normalwert liegt.

17. Schutzvorrichtung nach einem der Ansprüche 1 bis 16, dadurch **gekennzeichnet,** daß die Schutzvorrichtung in einem Gehäuse (D) angeordnet ist, daß mittels Steckverbinder (30,32) in die Stromzuleitung (2,3) des Gerätes einschaltbar ist und daß an der Außenseite des Gehäuses (G) das Einstellmittel (21) und der als Taster (23) ausgebildete Schalter (SW) zugänglich und die als Leuchtanzeigen ausgebildeten Anzeigemittel sichtbar sind.

FIG.1

Fig. 2

FIG. 3

FIG.4

FIG.5